# EUROPÄISCHE PATENTSCHRIFT

(11) **EP 0 464 401 B1**
(45) Veröffentlichungstag und Bekanntmachung des Hinweises auf die Patenterteilung: **17.11.1994**
(21) Anmeldenummer: 91109477.9
(22) Anmeldetag: 10.06.1991
(51) Int. Cl.: D01H 4/10

(54) **Offenend-Spinnrotor**
Open-ended spinning rotor
Rotor de filage à bout ouvert

(30) Priorität: 28.06.1990 DE 4020518
(43) Veröffentlichungstag der Anmeldung: 08.01.1992
(73) Patentinhaber: Rieter Ingolstadt Spinnereimaschinenbau AG, 85055 Ingolstadt (DE)
(72) Erfinder: Beitzinger, Kurt, W-8070 Ingolstadt (DE); Schoberth, Klaus, W-8070 Ingolstadt (DE); Kriechbaum, Kurt, W-8070 Ingolstadt (DE); Eisele, Dietmar, W-8070 Ingolstadt (DE)

(56) Entgegenhaltungen:
- EP-A- 0 090 939
- DE-A- 2 504 401
- DE-A- 2 812 297
- DE-A- 2 939 326
- DE-A- 3 519 536
- DE-A- 3 835 037
- FR-A- 2 203 896
- GB-A- 1 524 251

## Beschreibung

Die Erfindung betrifft einen Offenend-Spinnrotor gemäß dem Oberbegriff des Anspruches 1, sowie Verfahren zu seiner Herstellung. Es ist bekannt Offenend-Spinnrotoren an ihrem Schaft mittels verschiedenartiger Befestigungsmittel zu fixieren. Dies geschieht dabei auch aus Gründen der Auswechselbarkeit des Spinnrotors, so daß dieser bei Verschleiß vom Schaft entfernt und durch einen neuen ersetzt werden kann. Ein weiterer Grund dafür ist, daß Rotor und Schaft nur getrennt hergestellt und erst anschließend zusammengefügt werden können. Wichtig ist dabei eine gute Verbindung, da insbesondere bei Betrieb mit hohen Rotordrehzahlen starke Beanspruchungen auf die Verbindung einwirken. Für die Verbindung wird meist eine Habe verwendet, die auf dem Schaft mittels einer Schrumpfverbindung oder durch Anschrauben befestigt wird. Der Rotor wird mit der Habe verbunden und dadurch am Schaft befestigt. In der DE-OS 28 12 297 ist ein Rotor gezeigt, der mit seiner Habe einstückig ausgebildet ist. Durch Aufschrumpfen der Nabe auf den Schaft wird der Rotor an diesem befestigt.

Aus der DE 29 39 326 C2 ist ein Offenend-Spinnrotor bekannt, der mit einer Nabe durch Bördeln verbunden ist und diese ihrerseits auf dem Schaft aufgeschrumpft ist. Aus der DE-OS 25 04 401, Fig. 5 ist ein Offenend-Spinnrotor bekannt, bei dem der Spinnrotor auf eine Habe aufgenietet ist, die über eine Schraubverbindung mit dem Schaft verbunden ist. Aus der EP 0 090 939 B1 ist es bekannt, mittels Federscheiben einen Spinnrotor an seinem Rotorschaft zu befestigen. Dabei stützt sich der Spinnrotor axial an einem Bund oder an einer Federscheibe ab und wird durch eine Federscheibe gegen diese Abstützung gedrückt. Weiterhin ist aus der DE 35 19 536 A1 bekannt, den Spinnrotor an seinem Schaft mittels einer Reibschweißverbindung zu befestigen.

Bei den im Stand der Technik bekannten Befestigungsarten unter Verwendung einer Nabe bzw.eines Bundes besteht die Gefahr, daß sich der Bund während des Betriebs des Spinnrotors lockert. Bei Verwendung eines aufgeschrumpften, nabenartigen Bundes, ist es erforderlich diesen mit einer bestimmten axialen Ausdehnung auszugestalten, damit genügend Fläche für die kraftschlüssige Verbindung zur Verfügung steht. Schraubverbindungen sind insbesondere durch Vibrationen gefährdet; der Montageaufwand ist groß. Spinnrotoren, die mit ihrem Schaft durch Reibschweißen verbunden sind, haben den Nachteil, daß sie nicht mehr zum Zwecke des Austauschs vom Rotorschaft abgenommen und durch einen neuen Spinnrotor ersetzt werden können. Durch das Verschweißen des Rotors mit dem Schaft kann z.B. durch Verzug der Schweißverbindung nur sehr schwer eine exakte Ausrichtung von Rotor zum Schaft erfolgen. Ein Nachbearbeiten des Rotors um einen Versatz auszugleichen ist, wenn überhaupt, nur in sehr gerigem Maße möglich. Ein weiterer Nachteil besteht darin, daß der Boden des Rotors relativ dick ausgebildet werden muß, damit eine Reibschweißverbindung möglich ist, oder daß am Boden des Rotors ein zylindrischer Ansatz ausgebildet werden muß, was die Herstellung des Rotors erschwert und verteuert. Ein weiterer wesentlicher Nachteil ist, daß beim Abkühlen der Schweißverbindung sich diese verziehen kann, so daß der Rotor nicht exakt zum Schaft ausgerichtet ist. Insbesondere die Befestigung von Blechrotoren, die sehr geringe Wandstärken besitzen, ist damit nicht möglich. Ebenso wie die meisten Verbindungsarten hat das Anschweißen des Rotors am Schaft den Nachteil, daß der Spinnrotor durch den notwendigen Materialaufwand schwer ist. Ein weitere Nachteil der bekannten Spinnrotoren ist, daß der Abstand zwischen Lagerung des Schaftes und Rotor recht groß ist. Dies bedingt einen langen Rotorschaft, wodurch dessen kritische Betriebsdrehzahl niedrig liegt und daher keine hohen Drehzahlen gefahren werden können. Durch den langen Schaft ergeben sich ungünstige Hebelverhältnisse für die Lagermittel und damit höhere Belastungen für die Lager des Spinnrotors.

Aufgabe der vorliegenden Erfindung ist es, einen Offenend-Spinnrotor so auzubilden, daß alle Arten von Spinnrotoren mit dem Schaft verbunden werden können, der Offenend-Spinnrotor an seinem Schaft auf einfache Art sicher befestigt werden kann, den Offenend-Spinnrotor so auszubilden, daß der Abstand zwischen Spinnrotor und Stützscheibenlagerung möglichst klein gehalten werden kann, daß der Schaft möglichst kurz ausgebildet werden kann und der Offenend-Spinnrotor einfach und kostengünstig herstellbar ist und mit sehr hohen Drehzahlen betrieben werden kann.

Diese Aufgabe wird durch die Merkmale des Anspruchs 1 gelöst. Durch die erfindungsgemäße Ausbildung von Schaft und Bund wird erreicht, daß der Rotor sicher mit seinem Schaft verbunden werden kann. Durch die einstückige Ausbildung ist die Befestigung des Bunds gegenüber den im Betrieb auftretenden Belastungen, wie z.B. Schwingungen unempfindlich. Durch die einstückige Ausbildung kann der Bund in seiner axialen Ausdehnung kürzer und in seinen Abmessungen kleiner ausgebildet werden. Der Spinnrotor bzw. der Rotorschaft kann dadurch mit geringerer Masse hergestellt werden. Dies ermöglicht eine höhere Drehzahl des Rotorschaftes bei ansonst gleichen Abmessungen des Lagers. Durch geringere axiale Ausdehnung des Bundes kann der Rotor näher an seinem ihm zugeordneten Stützscheibenpaar gelagert werden. Der Rotorüberhang wird dadurch geringer, wodurch ebenfalls eine höhere Rotordrehzahl erzielbar ist. Bei gleicher Länge des Spinnrotors kann die Lagerung einen größeren Stützscheibenabstand aufweisen, was die Laufeigenschaften günstig beeinflußt. Besonders günstig für die Befestigung des Rotors am Schaft ist die Ausbildung des Bundes als Adapter. Dadurch kann die Aufnahme des Spinnrotors mit einem anderem Durchmesser ausgebildet werden. Wodurch eine günstigere Verbindung ermöglicht wird. Durch die Ausbildung des Adapters mit einem Zentrierabschnitt wird auf einfache Weise erreicht, daß der Spinnrotor zentrisch am Schaft befestigt werden kann. Besonders günstig für das exakte Ausrichten des Rotors zum Schaft ist es, wenn eine Anschlagfläche am Bund ausgebildet ist, an der sich der Rotor anlegt und ausrichtet. Durch die einstückige Ausbildung von Schaft und Bund ist es möglich Bund, Zentrierabschnitt und Anschlagfläche exakt zum Schaft ausgerichtet auszubilden. Dies geschieht vorteilhaft durch gemeinsames Bearbeiten des Schaftes mit seinem Bund. So können Bund und Rotor gemeinsam vorbearbeitet, z.B. durch Drehen, dann gehärtet und z.B. durch Schleifen fertig bearbeitet werden.

In weiterer Ausgestaltung der Erfindung werden Verfahren zur Herstellung von Spinnrotoren vorgeschlagen. Besonders günstig ist die Ausbildung des Spinnrotors mit einem Rotorschaft, der mit seinem Bund verschweißt ist. Dies bietet eine kostengünstige Möglichkeit der einstückigen Ausbildung. Eine günstige einstückige Ausbildung wird durch Widerstandsschweißen ermöglicht. Besonders kostengünstig ist es, wenn Schaft und Bund durch Reibschweißen verbunden werden. Dadurch wird es auch ermöglicht Bund und Rotorschaft aus verschiedenen Werkstoffen herzustellen. Besonders günstig ist es den Offenend-Spinnrotor aus einem einstückigen Schmiedeteil herzustellen. Dadurch erhält man besonders gute Festigkeitseigenschaften bei geringen Abmessungen des Bundes. Der Rotorschaft kann komplett in einem Arbeitsgang gefertig werden.

Im folgenden wird die Erfindung an Hand von zeichnerischen Darstellungen beschrieben. Es zeigen:
- Figur 1: einen über seinen Schaft im Keilspalt von Stützscheibenpaaren gelagerten Offenend-Spinnrotor;
- Figur 2: einen Offenend-Spinnrotor mit einem im Rotor angeordneten Bund;
- Figur 3: einen Adapter und einen Rotorschaft;
- Figur 4: einen Rotorschaft der mit dem Bund durch Reibscheißen verbunden ist;
- Figur 5: einen Rotorschaft mit Bund ohne Zentrieransatz; und
- Figur 6: den fertig bearbeiteten Schmiederohling der in Fig. 5 gezeigten Rotorschaft.

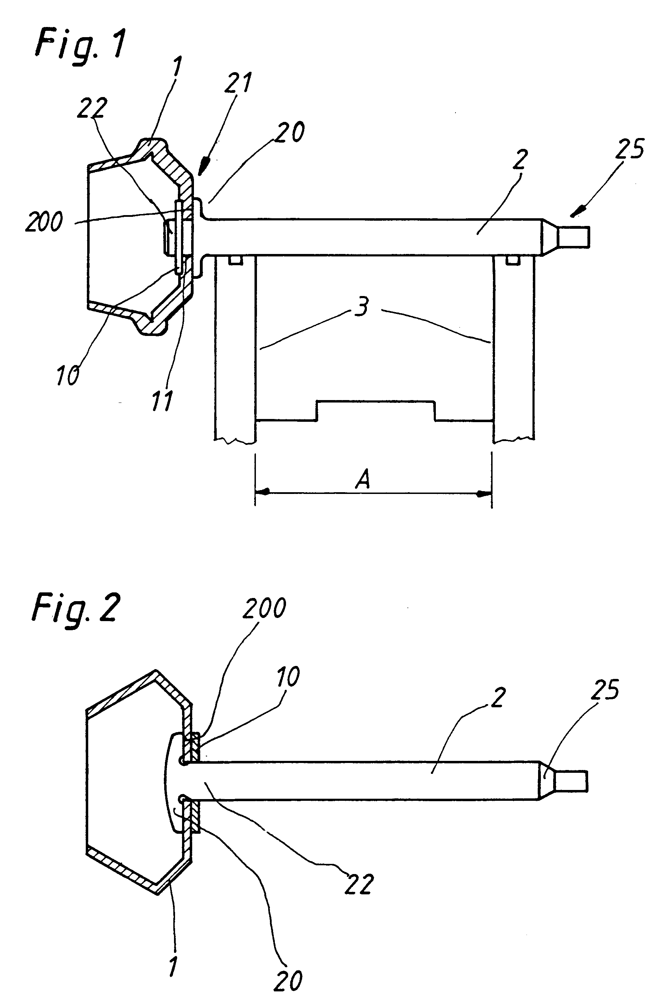

Figur 1 zeigt einen Spinnrotor 1 im Schnitt, der über seinen Schaft 2 gelagert ist. Die Lagerung erfolgt in bekannter Weise über Stützscheiben 3. Der Rotorschaft 2 ist mit einem Adapter 21 einstückig ausgebildet. Dieser besitzt einen Bund 20 und einen Zentrierabschnitt 22 zur Aufnahme des Spinnrotors 1 und die Ringfläche 200, die die Anlagefläche des Rotors 1 am Bund 20 ist. Der Spinnrotor 1 hat in seinem Boden eine Bohrung 11 durch die der Zentrierabschnitt 22 in das Innere des Spinnrotors hineinragt. Die Befestigung des Spinnrotors erfolgt durch eine Federscheibe 10 die diesen gegen den Bund 20 verspannt, wodurch der Spinnrotor 1 axial und radial sicher am Schaft 2 gehalten wird. An der Ringfläche 200 stützt sich der Rotor 1 ab und wird in der richtigen Position zum Rotorschaft 2 gehalten. Durch das Nachbearbeiten des Bundes 20 nach der Herstellung des Schaftes, ist die Ringfläche 200 exakt zum Rotorschaft 2 ausgerichtet. Dadurch ist auch der Rotor 1 exakt positioniert. Für die achsfluchtende Befestigung des Rotors dienen die Bohrung 11 im Rotorboden und der Zentrierabschnitt 22. Dieser ist durch die Nachbearbeitung ebenfalls, wie die Ringfläche 200 zum Schaft, exakt ausgerichtet. Durch die Möglichkeit den Bund 20 in axialer Richtung dünn auszubilden, kann der Spinnrotor mit sehr geringem Abstand zu dem ihm am nächsten gelegenen Stützscheibenpaar gelagert werden. Dadurch ist der Rotorüberhang sehr gering; der Schwerpunkt des Rotors 1 hat einen geringen Abstand zur Lagerung. Die am Rotorschaft angeordneten Mittel zum Halten des Spinnrotors besitzen durch die einstückige Ausbildung nur eine sehr geringe Masse. Durch die Befestigung des Spinnrotors mittels einer Federscheibe ist dieser auswechselbar mit seinem Schaft verbunden. Durch die Möglichkeit das dem Spinnrotor am nächsten gelegene Stützscheibenpaar sehr dicht an dem Schwerpunkt des Spinnrotors heranzuführen ist es möglich den Stützscheibenabstand A zu verkleinern. Der Schaft des Spinnrotors 1 kann dadurch kürzer ausgebildet werden, wodurch seine kritische Drehzahl erhöht wird. Der Abstand des Rotorschwerpunkts und gleichzeitig damit der Überhang des Rotors vor der Lagerung ist sehr gering. Durch diese baulichen Maßnahmen ist der Spinnrotor für höchste Rotordrehzahlen geeignet. Über sein freies Ende 25 stützt sich der Spinnrotor in bekannter Weise an einem Axiallager ab.

Figur 2 zeigt einen Spinnrotor 1 mit seinem Schaft 2 im Schnitt. Anders bei Figur 1 besitzt der durch Schmieden einstückig ausgebildete Rotorschaft 2 den Zentrierabschnitt 22 zur Aufnahme des Spinnrotors 2 zwischen dem Bund 20 und dem freien Ende 25 des Rotorschafts. Über eine Federscheibe 10 wird der Spinnrotor am Rotorschaft gehalten. Durch die hier gezeigte Anordnung des Zentrierabschnitts 22 liegt der Bund 20 mit der Ringfläche 200 zum Aufnehmen und positionierten Abstützen des Rotor 1 innerhalb des Spinnrotors, während sich die Federscheibe 10 in Richtung zum freien Ende des Rotorschaftes an den Rotor anschließt. Der Zentrierabschnitt 22 besitzt einen größeren Durchmesser als der Rotorschaft 2, so daß bei der Montage des Spinnrotors am Schaft durch das Aufbringen der Federscheibe 10 der fertig bearbeitete Rotorschaft 2 nicht beschädigt wird. Der Rotorschaft 2 ist durch Schmieden hergestellt, wobei der Bund 20 durch Stauchen des Schaftrohlings an diesem ausgebildet worden ist. Auch bei einem Spinnrotor, wie er in Figur 2 gezeigt ist, schließt sich das ihm am nächsten gelegene Stützscheibenpaar mit sehr geringem Abstand zum Schwerpunkt an den Spinnrotor an.

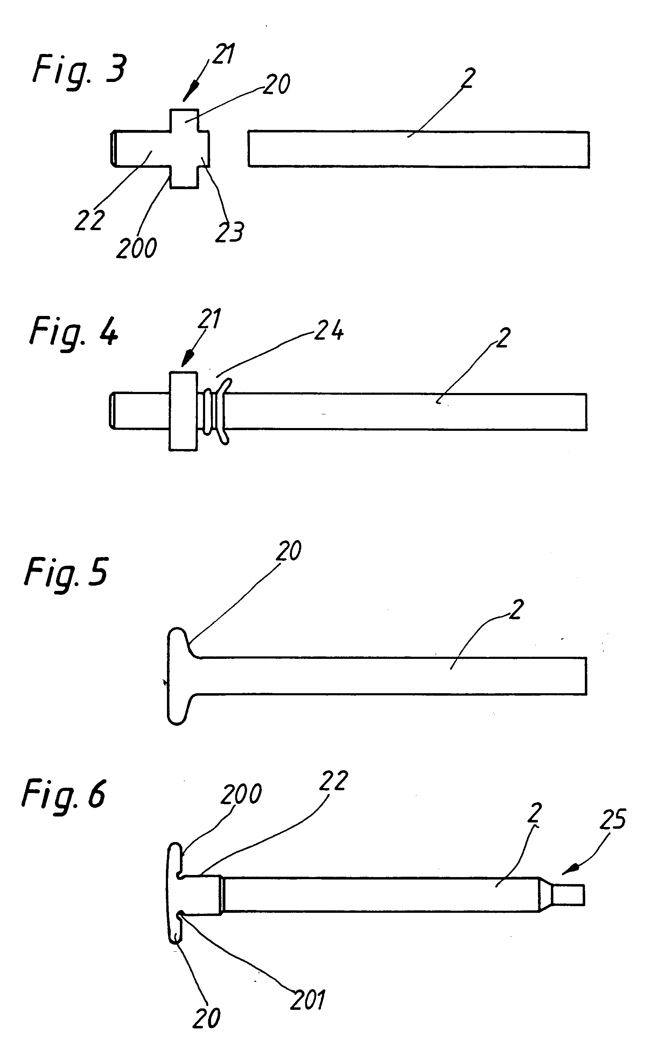

Figur 3 zeigt einen Adapter 21 und einen Schaft 2. Durch Widerstandspreßschweißen oder Reibschweißen werden beide zu einem Rotorschaft verschweißt. Der Bund 20 ist dadurch mit dem Schaft 2 einstückig ausgebildet. Der Adapter 21 besteht aus dem Bund 20 und dem Zentrierabschnitt 22 sowie der Ringfläche 200, an der sich der Rotor abstützt. Der Bund 20 hat einen Ansatz 23, der in etwa denselben Durchmesser wie der Schaft 2 besitzt und mit dem er am Schaft angeschweißt wird.

Figur 4 zeigt den nach dem Reibschweißen einstückigen Schaft 2, der durch Verschweißen von Adapter 21 mit dem Schaft 2 gebildet wurde. Nach dem Reibschweißen wird der Wulst 24, der beim Zusammenpressen von Adapter und Schaft 2 entstanden ist, z.B. durch Abdrehen entfernt. Die Schweißstelle bildet dann keinerlei störende Stelle im Werkstück mehr. Der Schaft 2 kann problemlos mit seiner Schweißstelle auf den Stützscheiben laufen. Das Verschweißen durch Widerstandspreßschweißen erfolgt mit denselben Ausgangsteilen und führt zum selben Ergebnis.

Vor dem Zusammenfügen zu einem einstückigen Schaft liegen Bund 20, bzw der Adapter 21, und der Schaft 2 als Rohlinge vor. Der Adapter 21 kann dabei durch Drehen oder durch Anstauchen hergestellt sein, der Schaftrohling 2 (Figur 3) z.B. durch Walzen. Die Bearbeitung des Schaftes erfolgt nach dem Zusammenfügen der Rohlinge, wobei die Art wie geschweißt wurde unerheblich ist. Dabei wird der Schaft z.B. spanend bearbeitet und behandelt, z.B. gehärtet, bis er in seiner entgültigen Form vorliegt. Dazu wird zunächst der Schaft überdreht, um z.B. auch den beim Schweißen entstandenen Wulst 24 zu entfernen. Als weiterer Schritt erfolgt das Härten und eventuell Vergüten des Schaftes worauf sich das Schleifen in die entgültige Form anschließt. Abschließend wird der Rotor montiert und ausgewuchtet. Vor oder nach dem Montieren kann der Spinnrotor und/oder der Schaft noch beschichtet werden.

Es können aber auch bereits vorbearbeitete Rohlinge verschweißt werden, so daß nur noch die Schweißnaht oder einer der Rohlinge vor dem Härten überdreht werden muß. Werden die Rohling besonders maßgenau vorgearbeitet, kann es wirtschaftlich sein, nur mittels Schleifen den Schaft zu bearbeiten. Dann erfolgt das Härten unmittelbar nach dem Schweißen.

Figur 5 zeigt einen Rotorschaft 2 mit einem Bund 20. Der Bund 20 ist einstückig mit dem Rotorschaft 2 durch Anstauchen des einen Endes des Schaftes 2 ausgebildet. Durch Schmieden, Gesenkschmieden und Stauchen kann aber auch ein Schaft mit Adapter ausgebildet werden.

Figur 6 zeigt den Schmiederohling von Figur 5 fertig bearbeitet. Der hier gezeigte Rotorschaft 2 ist so ausgebildet, daß er für die Verbindung mit einem Spinnrotor, wie sie in Figur 2 gezeigt ist, geeignet ist. Der Bund 20 besitzt eine ringförmige Fläche 200, die dem freien Ende 25 des Schaftes 2 zugewandt ist. Die Ringfläche 200 geht über einen Freistich 201 in den Zentrierabschnitt 22 über. Dieser ist im Durchmesser um so viel größer als der Schaft 2 ausgebildet, daß beim Verbinden von Rotor und Schaft 2 durch eine Federscheibe 10 das Aufbringen der Federscheibe auf den Zentrierabschnitt 22 so möglich ist, daß der Schaft 2 dadurch nicht beschädigt wird. Der Zentrierabschnitt 22 kann zur besseren Aufnahme des Rotors aber auch beispielsweise im Durchmesser wesentlich größer als der Rotoschaft ausgebildet werden. Durch den Freistich 201 ist gewährleistet, daß der Rotor 1 (vergleiche Figur 2) mit seinem Boden satt am Bund 20 des Schaftes anliegen kann. Die Bohrung im Boden des Rotors 1 kann dadurch im Durchmessers genau auf den des Zentrierabschnitts 22 abgestimmt werden.

Die Bearbeitung des geschmiedeten Schaftes erfolgt in derselben Weise wie die des geschweißten Schaftes. Nach dem Schmieden wird falls erforderlich vorgedreht, dann gehärtet, geschliffen, eventl. vergütet, montiert und beschichtet sowie gewuchtet. Die Erfindung ist unabhängig von der Lagerung des Schaftes und dessen Antriebsmitteln. Die Erfindung ist ebenso geeignet für Offenend-Spinnrotoren, die z.B. mittels Luftlagern oder direkt durch Gleit- oder Wälzlager gelagert sind.

## Patentansprüche

1. Offenend-Spinnrotor, der auf einem Rotorschaft angeordnet ist, welcher zur Zentrierung des Spinnrotors einen Zentrierabschnitt aufweist, wobei sich der Spinnrotor axial an einem Bund abstützt, dadurch gekennzeichnet, daß der Rotorschaft (2) mit dem Bund (20) einstückig ausgebildet ist, daß der Bund (20) als Adapter (21) ausgebildet ist und der Rotorschaft (2) mit dem Bund (20) verschweißt ist.

2. Offenend-Spinnrotor nach Anspruch 1, dadurch gekennzeichnet, daß der Bund (20) mit dem Rotorschaft (2) durch eine Abbrennschweißverbindung einstückig ausgebildet ist.

3. Offenend-Spinnrotor nach Anspruch 1, dadurch gekennzeichnet, daß der Bund (20) mit dem Rotorschaft (2) durch eine Reibschweißverbindung einstückig ausgebildet ist.

4. Offenend-Spinnrotor, der auf einem Rotorschaft angeordnet ist, welcher zur Zentrierung des Spinnrotors einen Zentrierabschnitt aufweist, wobei sich der Spinnrotor axial an einem Bund (20) abstützt, dadurch gekennzeichnet, daß der Schaft (2) mit dem Bund (20) einstückig ausgebildet ist, wobei Rotorschaft (2) und Bund (20) ein einstückiges Schmiedeteil sind.

5. Offenend-Spinnrotor nach Anspruch 4, dadurch gekennzeichnet, daß der Bund (20) durch Anstauchen eines Endes des Rotorschaftes gebildet ist.

6. Offenend-Spinnrotor nach Anspruch 5, dadurch gekennzeichnet, daß der Bund (20) das Ende des Schaftes (2) bildet.

7. Offenend-Spinnrotor nach einem oder mehreren der Ansprüche 1 bis 6, dadurch gekennzeichnet, daß der Schaft (2) zur Aufnahme des Rotors (1) einen Durchmesser aufweist, der größer als der des übrigen Rotorschaftes (2) ist.

8. Offenend-Spinnrotor nach einem oder mehreren der Ansprüche 1 bis 7, dadurch gekennzeichnet, daß der Bund (20) eine Anschlagfläche (200) aufweist, die einen Anschlag zum Ausrichten des Rotors (1) zum Schaft (2) bildet.

9. Offenend-Spinnrotor nach einem oder mehreren der Ansprüche 1 bis 8, dadurch gekennzeichnet, daß der Zentrierabschnitt (22) einen größeren Durchmesser als der Rotorschaft (2) besitzt.

10. Offenend-Spinnrotor nach einem oder mehreren der Ansprüche 1 bis 9, dadurch gekennzeichnet, daß der Übergang vom Bund (20) zum Schaft (2) mit einer freistichartigen Ausnehmung (201) erfolgt.

11. Verfahren zum Herstellen eines Spinnrotors nach Anspruch 1, dadurch gekennzeichnet, daß die Ausgangsbestandteile des Rotorschaftes (2) als Rohlinge von Rotorschaft (2) und Bund (20) vorgefertigt werden, diese durch Schweißen miteinander zu einem einstükkigen Schaft (2) verbunden werden, dieser durch Bearbeiten in seine endgültige Form gebracht wird, und anschließend mit dem Spinnrotor (1) verbunden wird.

12. Verfahren nach Anspruch 11, dadurch gekennzeichnet, daß die Rohlinge von Rotorschaft (2) und Bund (20) durch Reibschweißen miteinander verbunden werden.

13. Verfahren nach Anspruch 11, dadurch gekennzeichnet, daß die Rohlinge von Rotorschaft (2) und Bund (20) durch Widerstandsschweißen oder Abbrennschweißen miteinander verbunden werden.

14. Verfahren zum Herstellen eines Spinnrotors nach Anspruch 4, dadurch gekennzeichnet, daß der Rotorschaft (2) durch Schmieden einstückig hergestellt wird, anschließend durch Bearbeiten in seine endgültige Form gebracht wird und anschließend mit dem Spinnrotor (1) verbunden wird.

15. Verfahren nach Anspruch 14, dadurch gekennzeichnet daß das Schmieden durch Gesenkschmieden erfolgt.

16. Verfahren nach Anspruch 14, dadurch gekennzeichnet, daß das Schmieden des Rotorschafts durch Anstauchen eines Endes eines Schaftrohlings erfolgt.

17. Verfahren nach einem oder mehreren der Ansprüche 11 oder 12, dadurch gekennzeichnet, daß mindestens einer der Rohlinge fertig gedreht und/oder geschliffen ist.

18. Verfahren nach einem oder mehreren der Ansprüche 11 bis 17, dadurch gekennzeichnet, daß die Bearbeitung durch Drehen und/oder Schleifen erfolgt.

19. Verfahren nach Anspruch 18, dadurch gekennzeichnet, daß die Rohlinge oder der einstückige Schaft (2) vor dem Schleifen gehärtet werden.

## Claims

1. Open-end spinning rotor which is arranged on a rotor shaft which has a centring section for centring the spinning rotor, the spinning rotor being axially supported on a collar, characterized in that the rotor shaft (2) is constructed in one piece with the collar (20), in that the collar (20) is constructed as an adapter (21) and the rotor shaft (2) is welded to the collar (20).

2. Open-end spinning rotor according to Claim 1, characterized in that the collar (20) is constructed in one piece with the rotor shaft (2) by means of a burn-off welding connection.

3. Open-end spinning rotor according to Claim 1, characterized in that the collar (20) is constructed in one piece with the rotor shaft (2) by means of a friction welding connection.

4. Open-end spinning rotor which is arranged on a rotor shaft which has a centring section for centring the spinning rotor, the spinning rotor being axially supported on a collar (20), characterized in that the shaft (2) is constructed in one piece with the collar (20), rotor shaft (2) and collar (20) being a one-piece forged part.

5. Open-end spinning rotor according to Claim 4, characterized in that the collar (20) is formed by upsetting an end of the rotor shaft.

6. Open-end spinning rotor according to Claim 5, characterized in that the collar (20) forms the end of the shaft (2).

7. Open-end spinning rotor according to one or more of Claims 1 to 6, characterized in that for receiving the rotor (1) the shaft (2) has a diameter which is larger than that of the rest of the rotor shaft (2).

8. Open-end spinning rotor according to one or more of Claims 1 to 7, characterized in that the collar (20) has a stop surface (200) which forms a stop for aligning the rotor (1) with respect to the shaft (2).

9. Open-end spinning rotor according to one or more of Claims 1 to 8, characterized in that the centring section (22) has a larger diameter than the rotor shaft (2).

10. Open-end spinning rotor according to one or more of Claims 1 to 9, characterized in that the transition from the collar (20) to the shaft (2) is made by an undercut-type cutout (201).

11. Method of producing a spinning rotor according to Claim 1, characterized in that the starting components of the rotor shaft (2) are prefabricated as blanks of rotor shaft (2) and collar (20), said blanks being connected to one another by welding to form a one-piece shaft (2), and said shaft (2) being brought to its final shape by machining and then being connected to the spinning rotor (1).

12. Method according to Claim 11, characterized in that the blanks of rotor shaft (2) and collar (20) are connected to one another by friction welding.

13. Method according to Claim 11, characterized in that the blanks of rotor shaft (2) and collar (20) are connected to one another by resistance welding or burn off welding.

14. Method of producing a spinning rotor according to Claim 4, characterized in that the rotor shaft (2) is produced in one piece by forging, is then brought to its final shape by machining and is then connected to the spinning rotor (1).

15. Method according to Claim 14, characterized in that forging takes place by drop forging.

16. Method according to Claim 14, characterized in that forging of the rotor shaft takes place by upsetting an end of a shaft blank.

17. Method according to one or more of Claims 11 or 12, characterized in that at least one of the blanks is finish-lathed and/or ground.

18. Method according to one or more of Claims 11 to 17, characterized in that machining takes place by lathing and/or grinding.

19. Method according to Claim 18, characterized in that the blanks or the one-piece shaft (2) are hardened before grinding.

## Revendications

1. Rotor de filature à fibres libérées, qui est disposé sur un arbre de rotor présentant, pour le centrage du rotor de filature, un tronçon de centrage, de sorte que le rotor de filature s'appuie axialement sur un épaulement, rotor caractérisé en ce que l'arbre (2) du rotor est réalisé en un seul bloc avec l'épaulement (20) ; en ce que l'épaulement (20) a la forme d'un raccord d'adaptation (21) et en ce que l'arbre (2) du rotor est soudé à l'épaulement (20).

2. Rotor de filature à fibres libérées selon la revendication 1, caractérisé en ce que l'épaulement (20) est réalisé en un seul bloc avec l'arbre (2) de rotor, grâce à une liaison par soudure par fusion.

3. Rotor de filature à fibres libérées selon la revendication 1, caractérisé en ce que l'épaulement (20) est réalisé en un seul morceau avec l'arbre (2) du rotor par une liaison par soudure par friction.

4. Rotor de filature à fibres libérées, qui est disposé sur un arbre de rotor présentant pour le centrage du rotor de filature un tronçon de centrage, de sorte que le rotor de filature s'appuie axialement sur un épaulement (20), rotor caractérisé en ce que l'arbre (2) est réalisé en un seul bloc avec l'épaulement (20), de sorte que l'arbre (2) du rotor et l'épaulement (20) constituent une seule pièce de forgeage.

5. Rotor de filature à fibres libérées selon la revendication 4, caractérisé en ce que l'épaulement (20) est formé par refoulement d'une extrémité de l'arbre de rotor.

6. Rotor de filature à fibres libérées selon la revendication 5, caractérisé en ce que l'épaulement (20) forme l'extrémité de l'arbre (2).

7. Rotor de filature à fibres libérées selon une ou plusieurs des revendications 1 à 6, caractérisé en ce que, pour recevoir le rotor (1), l'arbre (2) présente un diamètre supérieur à celui du reste de l'arbre (2) du rotor.

8. Rotor de filature à fibres libérées selon une ou plusieurs des revendications 1 à 7, caractérisé en ce que l'épaulement (20) présente une surface (200) d'appui qui forme un appui pour centrer et aligner le rotor (1) par rapport à l'arbre (2).

9. Rotor de filature à fibres libérées selon une ou plusieurs des revendications 1 à 8, caractérisé en ce que le tronçon de centrage (22) présente un diamètre supérieur à celui de l'arbre (2) de rotor.

10. Rotor de filature à fibres libérées selon une ou plusieurs des revendications 1 à 9, caractérisé en ce que la transition de l'épaulement (20) à l'arbre (2) a lieu à l 'aide d'un évidement (201) du genre d'une gorge.

11. Procédé pour fabriquer un rotor de filature selon la revendication 1, caractérisé en ce que les pièces de départ constitutives de l'arbre (2) du rotor sont préterminées sous forme d'ébauches de l'arbre (2) du rotor et de l'épaulement (20), ces pièces sont reliées l'une à l'autre par soudage pour donner un arbre (2) en une seule pièce, cet arbre est mis par usinage à sa forme finale et il est ensuite relié au rotor (1) de filature.

12. Procédé selon la revendication 11, caractérisé en ce que les ébauches de l'arbre (2) de rotor et de l'épaulement (20) sont reliées l'une à l'autre par soudage par friction.

13. Procédé selon la revendication 11, caractérisé en ce que les ébauches de l'arbre (2) de rotor et de l'épaulement (20) sont reliées l'une à l'autre par soudage par résistance ou par soudage par fusion ou étincelage.

14. Procédé pour fabriquer un rotor de filature selon la revendication 4, caractérisé en ce que l'arbre (2) du rotor est produit en une seule pièce par forgeage, puis il est mis par usinage à sa forme finale et il est ensuite relié au rotor (1) de filature.

15. Procédé selon la revendication 14, caractérisé en ce que le forgeage a lieu par matriçage.

16. Procédé selon la revendication 14, caractérisé en ce que le forgeage de l'arbre de rotor a lieu par refoulement d'une extrémité d'une ébauche d'arbre.

17. Procédé selon une ou plusieurs des revendications 11 ou 12, caractérisé en ce qu'au moins l'une des ébauches est terminée par tournage et/ou par rectification par meulage et polissage.

18. Procédé selon une ou plusieurs des revendications 11 à 17, caractérisé en ce que l'usinage a lieu par tournage et/ou par meulage et rectification.

19. Procédé selon la revendication 18, caractérisé en ce que les ébauches ou l'arbre (2) en un seul morceau est ou sont durcis avant le meulage de rectification.
